(19) Europäisches Patentamt

European Patent Office

Office européen des brevets

(11) **EP 1 065 814 B1**

(12) **EUROPEAN PATENT SPECIFICATION**

(45) Date of publication and mention
of the grant of the patent:
**31.08.2005 Bulletin 2005/35**

(51) Int Cl.⁷: **H04H 1/00**

(21) Application number: **00113717.3**

(22) Date of filing: **28.06.2000**

(54) **Receiver for receiving Digital Audio Broadcasts (DAB)**

Empfänger für den Empfang vom digitalen Hörfunk DAB

Récepteur pour la réception de la radiodiffusion numérique DAB

(84) Designated Contracting States:
**DE GB**

(30) Priority: **30.06.1999 JP 18456999**

(43) Date of publication of application:
**03.01.2001 Bulletin 2001/01**

(73) Proprietor: **Pioneer Corporation**
**Tokyo 153-0063 (JP)**

(72) Inventors:
• **Kato, Sei, c/o Pioneer Corporation**
**Kawagoe-shi, Saitama 350-0822 (JP)**
• **Miyahara, Yutaka, c/o Pioneer Corporation**
**Kawagoe-shi, Saitama 350-0822 (JP)**

• **Kusunoki, Masahiro, c/o Pioneer Corporation**
**Kawagoe-shi, Saitama 350-0822 (JP)**

(74) Representative: **Grünecker, Kinkeldey,**
**Stockmair & Schwanhäusser Anwaltssozietät**
**Maximilianstrasse 58**
**80538 München (DE)**

(56) References cited:
**EP-A- 0 464 670      EP-A- 0 896 425**

• **PATENT ABSTRACTS OF JAPAN vol. 1999, no.**
**08, 30 June 1999 (1999-06-30) & JP 11 068596 A**
**(ALPINE ELECTRON INC), 9 March 1999**
**(1999-03-09)**

**EP 1 065 814 B1**

**Description**

The present invention relates to a DAB (Digital Audio Broadcasting) Receiver.

2. Description of the Related Art

A DAB broadcasting is now employed in Europe countries and Canada and Singapore, etc. The frequency is used in the bands of BANDIII (174-240 MHz) and L-BAND (1452-1492 MHz).

A receiving apparatus capable of receiving digital broadcasting in two frequency bands is described in EP-A-0 896 425. In a first embodiment the received VHF-signal is down converted to a first intermediate frequency by a signal of a local oscillator. A received L-Band signal is down converted to the same first intermediate frequency in a two step down conversion with the help of two local oscillators. In a second embodiment, the received lower frequency band (VHF) signals are up converted, and the frequencies of the received upper frequency band (L-Band) are down converted to a first intermediate frequency, by using the half and the full frequency of a single local oscillator. In both embodiments the first intermediate frequency is further down converted, using another local oscillator, to a second intermediate frequency for further processing, including orthogonal demodulation, FFT and Viterbi decoding.

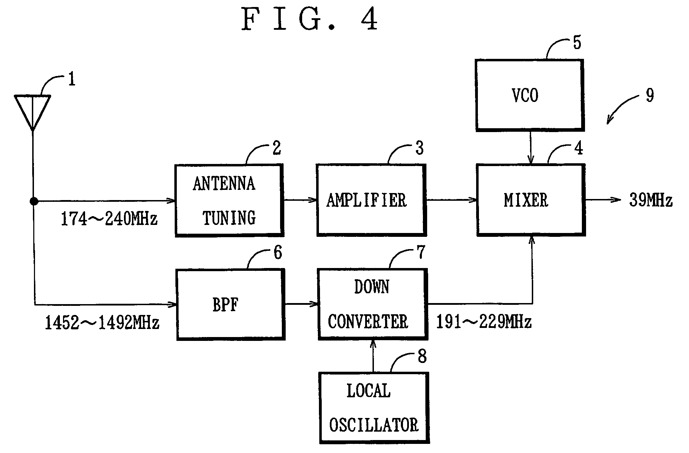

The general structure of a DAB receiver for receiving a DAB broadcasting signal is shown in Fig. 4.

In Fig. 4, the signal in the frequency band of BANDIII supplied through an antenna 1 is selectively received by an antenna tuning circuit 2. The received signal is amplified and supplied to a mixer circuit. The mixer circuit 4, when supplied with the signal at the oscillating frequency of 136 - 200 MHz from VCO (voltage-controlled oscillator), converts the signal in the frequency band of BANDIII into the signal at an intermediate frequency of 39 MHz.

On the other hand, the signal in the frequency band of L-BAND supplied through the antenna 1 is supplied to a down-converter 7 through a BPF 6. When the down converter 7 is supplied with the signal at a fixed oscillating frequency of 1262 MHz from a local oscillator 8, it converts the signal in the frequency band of L-BAND into the signal in the frequency band (191 - 229 MHz) of BANDIII and supplies the converted signal to the mixer circuit 4. The mixer circuit 4, when supplied with the signal at the oscillating frequency of 152 - 190 MHz from VCO (voltage-controlled oscillator) 5, converts the signal in the frequency band of BANDIII into the signal at an intermediate frequency of 39 MHz.

The DAB receiver 9 is adapted so that while the signal in the one frequency band is received, the power for the main circuit for the signal in the other frequency band remains "off". Therefore, for example, when the signal in the frequency band of L-BAND is received and converted into the signal in the frequency band of BANDIII, it does not influence the inherent signal in the frequency band of BANDIII. For this reason, the DAB receiver 9 thus configured presents no problem when it is used in households. However, when it is used for a vehicle, a problem occurs in the following environment.

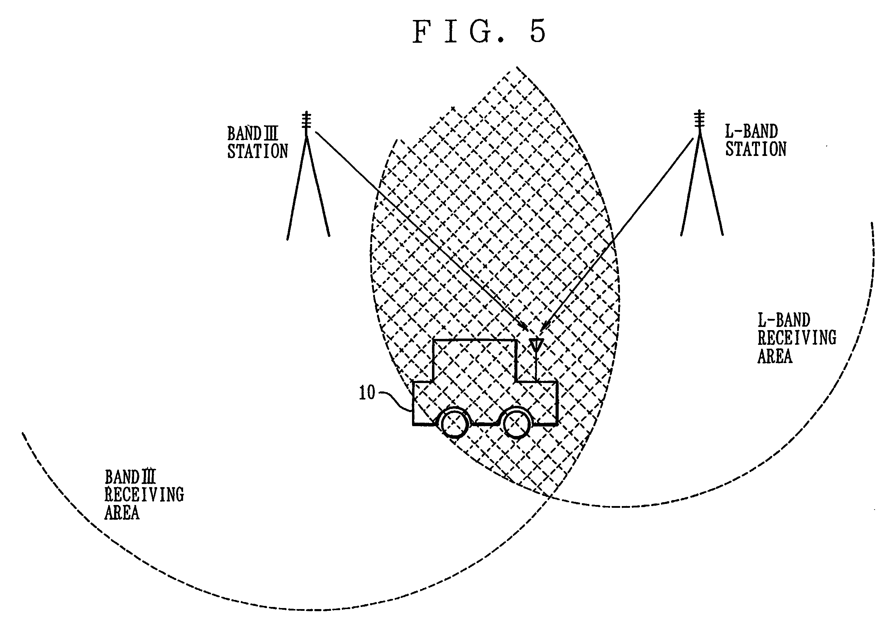

Fig. 5 shows a status where a vehicle 10 has entered an area which permits both BANDIII station and L-BAND station to be received while it is running. Generally, where broadcasting stations are to use the signals in neighboring frequency bands, they are located so that their signal receivable areas are not overlapped. However, since the BANDIII station and L-BAND station use entirely different frequency bands, as shown in Fig. 5, there is an area (cross-hatched portion) where the receiving areas of the BANDIII station and L-BAND station overlap each other.

The DAB receiver 9 amplifies the signal in the frequency band of BANDIII as it is, and converts the signal in the frequency band of L-BAND into the signal in the same frequency band as that in BANDIII. In this case, as described above, when the signal in the frequency band of BANDIII is received, the power for the main circuit such as the down converter 7 is turned OFF, and when the signal in the frequency band of L-BAND is received, the power for the main circuit such as the amplifier 3 is turned OFF. Therefore, no problem occur. However, for example, while the L-BAND station is received by the DAB receiver 9 aboard the vehicle 10, when the vehicle 10 runs in the vicinity of the BANDIII station, the following problem occurs. Specifically, if the transmitting power of the BANDIII station is relatively high, although the power for the main circuit such as the amplifier 3 is OFF, the signal from the BANDIII station incorporated through the antenna 1 invades the mixer circuit 4. This generates disturbance of interference between that signal and the signal at the frequency converted by the down converter 7.

An object of the present invention is to provide a DAB receiver capable of suppressing disturbance of radio interference in a simple structure

In accordance with the present invention, there is provided a DAB receiver comprising:

a first receiving section for receiving a first signal in a first frequency band supplied through a first antenna;
first damping means for damping the first signal received by the first receiving section, the first damping means being located immediately before the first receiving means;
a second receiving section for receiving a second signal in a second frequency band higher than the first frequency band, supplied through a second antenna, the second receiving section having means for converting the second frequency band into the first frequency band;

second damping means for damping the second signal received by the second receiving section, the second damping means being located immediately before the second receiving section, and directly coupled with the first damping means; and

voltage supplying means for driving the first and second damping means according to the value of the first signal or second signal through the first antenna or second antenna.

In this configuration, the first and the second damping means are directly coupled with each other. In addition, the first damping means and second damping means are located immediately before the first receiving section and the second receiving section, respectively. Therefore, when the signal having a large signal in LBAND is received through the second antenna, the second damping means is driven by the voltage supplying means and the first damping means is also driven through the coupling means. Thus, the signal supplied through the first antenna is damped by the impedance of the first damping means so that interference disturbance can be prevented. In this way, the interference disturbance can be prevented in a simple configuration of the DAB receiver.

The above and other objects and features of the present invention will be more apparent from the following description taken in conjunction with the accompanying drawings.

Fig. 1 is a block diagram of the main configuration of a DAB receiver according to an embodiment of the invention;
Figs. 2A and 2B are tables of references of the DAB broadcasting in service in European countries and Singapore;
Fig. 3 is a graph showing the relationship between an antenna input voltage of the DAB receiver, and an output level and an AGC voltage; and
Fig. 4 is a block diagram of the main configuration of a conventional DAB receiver; and
Fig. 5 is a view showing signal receiving areas for BANDIII and L-BAND.

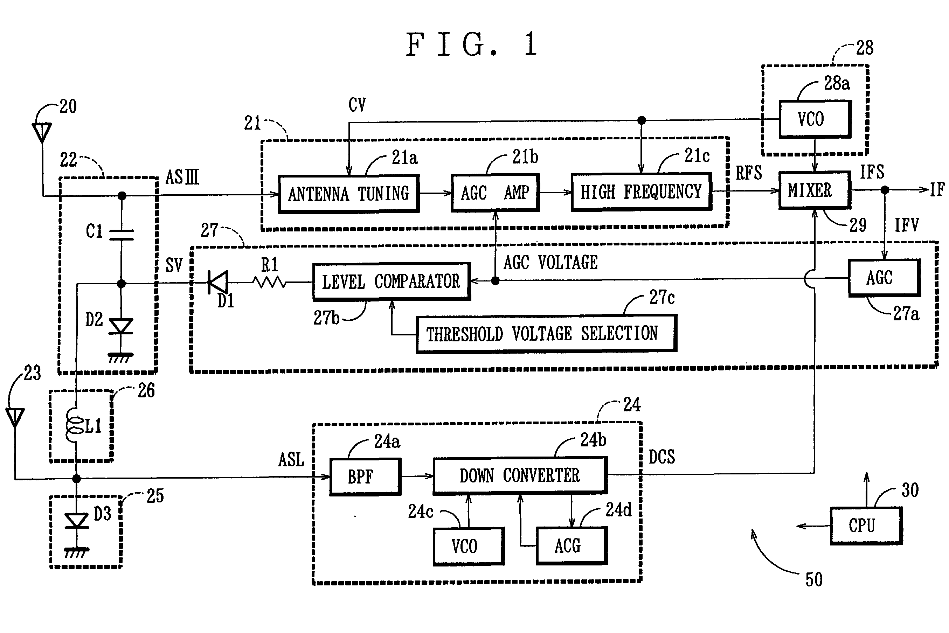

Fig. 1 is a block diagram of the main configuration of a DAB receiver according to an embodiment of the invention.

Now referring to the drawing, an explanation will be given of the structure and operation of individual circuit blocks of the DAB receiver.

A DAB receiver 50 according to the present invention includes a first antenna 20 for receiving a signal in the first frequency band of BANDIII, a first receiving section 21 for amplifying the signal supplied from the first antenna, a first damping means 22 for damping the first signal received by the first receiving section 21, a second antenna 23 for receiving the signal in the second frequency band of L-BAND, a second receiving section 24 having a means for converting the signal in the L-BAND supplied through the second antenna 23 into the signal in the frequency band of BANDIII (hereinafter referred to as "converted L-BAND), a second damping means 25 for damping the second signal received by the second receiving section 24, a coupling means 26 for coupling the first damping means 22 and second damping means 25 with each other, a voltage supplying means 27 for driving the first and the second damping means 22, 25 in accordance with the values of the signals supplied from the first and the second antennas 20, 23, a mixer (MIX) circuit 29 for converting the signals in the BANDIII and the converted L-BAND into that at an intermediate frequency and a PLL circuit 28.

The first damping means 22 is located between the first antenna 20 and ground, and composed of a DC-blocking capacitor C1 and PIN diode D2. The PIN diode D2 is a high frequency diode whose impedance decreases with an increase in the value of a forward current. When the PIN diode D2 is supplied with a voltage from a voltage supplying means 27 described later, it is forward-biased and hence its impedance is attenuated. In short, the first damping means 22 serves as a circuit for damping (or short-circuiting) the input impedance of the first receiving section 21 by the impedance of the PIN diode D2.

The first receiving section 21 includes an antenna tuning circuit 21a which is tuned with the intermediate frequency of a desired broadcasting station in the signal ASIII in the frequency band of BANDIII supplied through the first antenna 20, an AGC amplifier 21b of a dual gate MOSFET whose gain changes according to the value of the voltage supplied from the voltage supplying means 27, and a high frequency tuning circuit 21c which is tuned with an amplified high frequency signal RFS.

The antenna tuning circuit 21a and high frequency tuning circuit 21c constitute a parallel resonating circuit which is composed of variable capacitance diodes each with the capacitance changed according to an applied voltage, coils and others. The resonance frequency of the antenna tuning circuit 21a and high frequency tuning circuit 21c is changed within a range of the frequency band of BANDIII according to a DC control voltage CV supplied from a PLL circuit 28 described later. Namely, the antenna frequency circuit 21a and the high frequency tuning circuit 21c serve to selectively receive only the signal at the frequency of the desired station from the signal ASIII within BANDIII.

The PLL circuit 28 is composed of a VCO 28a, and components not shown inclusive of a frequency divider, a phase comparator, a reference oscillator and an LPF. The PLL circuit 28 serves to control the oscillating frequency of the VCO 28a with the accuracy of the reference oscillator in such a manner that the phase at the frequency when the oscillating frequency of the VCO 28a is divided by the frequency divider is compared with the phase in the reference oscillator oscillating with high accuracy by the phase comparator and the oscillating frequency of the VCO 28a is controlled by the control voltage produced from the phase comparator according to the phase difference.

Thus, the VCO 28a is controlled at each oscillating frequency (for example, 1.712 MHz) integer-times as large as the oscillating frequency of the reference oscillator.

The mixer circuit 29 serves to extract either one of the sum of or difference between two frequencies generated when the two different frequencies are mixed. Specifically, the mixer circuit 29 mixes the signal at the oscillating frequency supplied from the VCO 28a and the high frequency signal RFS produced from the high frequency tuning circuit 21c to extract the frequency corresponding to the difference, for example, which results the intermediate frequency IF by the following Equation:

The frequency band of BANDIII (174.928 ~ 239.200 MHz)

- the oscillating frequency of VCO 28a (136.016 ~ 200.288 MHz)

= intermediate frequency (38.912 MHz).                    (1)

Therefore, where the station at e.g. 174.928 MHz in the frequency band of BANDIII is to be received, the PLL circuit 28 supplies the control voltage CV so that the antenna tuning circuit 21a and the high frequency tuning circuit 21c are tuned with the frequency of 174.928 MHz. Such a voltage causes the VCO 28a to oscillate at the frequency of 136.016 MHz. The mixer circuit 29 produces a first intermediate frequency IF (38.912 MHz) which is a difference between the two frequencies 174.928 MHz and 136.016 MHz.

On the other hand, the second damping means 25 which is located between the second antenna 23 and ground is constructed of a PIN diode D3 like the first damping means 22. The second damping means 25 is coupled with the PIN diode D2 of the first damping means 22 through a high frequency coil L1 serving as a coupling means 26. Therefore, when the PIN diode D2 of the first damping means 22 is forward-biased, the PIN diode D3 of the second damping means 25 is also simultaneously forward-biased.

The coupling means 26 is constructed of a high frequency coil L1 having high high-frequency impedance and small DC resistance in order to enhance the isolation between the first antenna 20 and the second antenna 23 and suppress the voltage drop supplied from the voltage supplying means 27.

The second signal receiving section 24 includes a BPF 24a passing the signal ASL in the frequency band of L-BAND (1452.960 ~ 1490.624 MHz) supplied through the second antenna 23; a down converter 24b which is a converting means incorporating a PLL circuit, an AGC amplifier, a mixer circuit, etc.; an VCO 24c oscillating at a fixed frequency; and an AGC circuit 24d.

The PLL circuit is configured like the above PLL circuit 28. Namely, the PLL circuit serves to control the oscillating frequency of the VCO in such a manner that the phase at the frequency when the oscillating frequency of the VCO 24c is divided by the frequency divider is compared with the phase at the frequency when the reference oscillator oscillating with high accuracy is divided by the phase comparator and the oscillating frequency of the VCO 24c is controlled by the control voltage produced from the phase comparator according to the phase difference. Therefore, the VCO 24c is an oscillator at a fixed frequency and is controlled with the accuracy of the frequency when the frequency of the reference oscillator is divided.

The signal ASL in the L-BAND supplied through the second antenna 23 is supplied to the down converter 24b through the BPF 24a, and mixed with the oscillating frequency (1261.568 MHz) from the VCO 24c by the incorporated mixer so that it is converted into the signal DCS of the converted L-BAND (191.392 - 229.056 MHz) in the frequency band of BANDIII which will be supplied to the mixer circuit 29.

The PLL circuit 28, when the signal DCS in L-BAND is received by the mixer 29, changes the oscillating frequency of the VCO 28a into a different oscillating frequency (152.480 ~ 190.144 MHz) from when the signal in BANDIII is received. Thus, the first intermediate frequency IF is produced as in the case where the signal in BANDIII is received.

The voltage supplying means 27 includes an AGC circuit 27a for detecting the signal IFS at the intermediate frequency IF which is produced from the mixer 29 and producing a AGC DC voltage corresponding to the output level IFV of the intermediate frequency signal IFS; a level comparator 27b for supplying a switch voltage SV to the first and the second damping means 22, 25 through the resistor R1 and diode D1 when an AGC voltage from the AGC circuit 27a is not higher than a prescribed threshold voltage; and a threshold voltage selecting circuit 27c for selecting the prescribed threshold voltage for the level comparator 27b.

More specifically, the AGC circuit 27a detects the output level IFV of the intermediate frequency signal IFS, supplies the DC voltage thus obtained to the base of a transistor not shown and produces the collector voltage of the transistor as the AGC voltage. Therefore, the AGC circuit 27a operates in such a manner that if the signal supplied through the antenna is small, i.e. the output level IFV of the intermediate frequency signal IFS is small, a certain AGC voltage (e.g. 5 V) is produced, but as the signal supplied through the antenna becomes large, i.e. the output level IFV of the intermediate frequency signal IFS becomes large, correspondingly, the AGC voltage gradually lowers. The relationship between the antenna input voltage and AGC voltage will be explained later.

The AGC amplifier 21b is supplied, at the one gate terminal of the dual gate MOSFET, with the AGC voltage. Therefore, if the signal supplied through the antenna is small, the AGC amplifier 21b is supplied with a high AGC voltage and hence operates at the maximum gain. As the signal supplied through the antenna becomes large, the AGC voltage lowers. Correspondingly, the voltage at the gate terminal lowers and hence as the signal supplied through the antenna becomes large, the gain of the AGC amplifier 21b gradually lowers.

When the gain of the AGC amplifier 21b becomes approximately zero, the first and the second damping means 22 and 25 are operated through a level comparator 27b. In this case, the level of the signal supplied through the antenna can be known by the AGC voltage and the signal level providing the zero gain of the AGC amplifier 21b can also be known. Therefore, the level comparator 27b serves to supply a driving voltage SV to the first and the second damping means 22, 25 when the AGC voltage is a prescribed threshold value or lower, and the threshold value is determined at a value when the gain of the AGC amplifier 21b becomes approximately zero as the signal supplied through the antenna increases.

The threshold voltage selecting circuit 27c is provided to change the threshold value prescribed in the level comparator 27b when the signal in BANDIII is received and when the signal in LBAND is received.

Referring to Figs. 1 to 3, an explanation will be given of the operation of the entire DAB receiver 50.

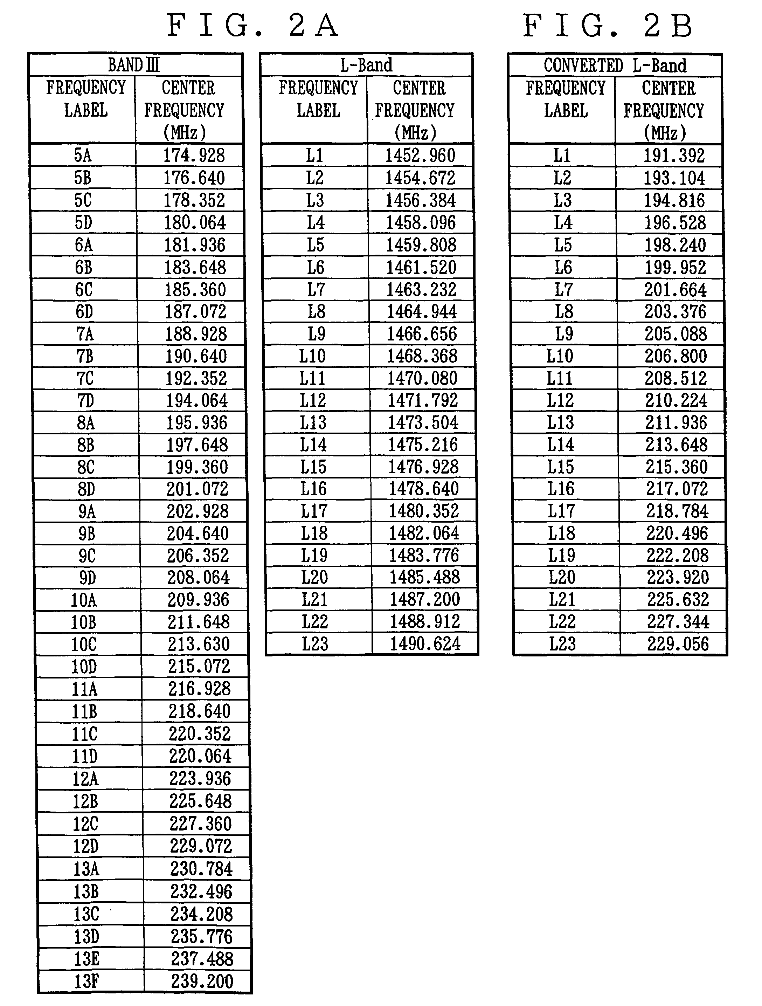

Figs. 2A and 2B are tables of frequencies of DAB broadcasting stations used in European countries and Singapore. Specifically, Fig. 2A shows the frequency bands in BANDIII and L-BAND and Fig. 2B shows the frequency bands in the converted L-BAND. In the DAB broadcasting, the BANDIII stations include 38 channels divided every 1.712 MHz over the frequency band from 174.928 to 239.200 MHz of the central frequency. Frequency labels (5A - 13F) are given to the central frequencies, respectively. The L-BAND stations include 23 channels divided every 1.712 MHz, like the BANDIII stations, over the frequency band from 1452.960 to 1490.624 MHz of the central frequency. Frequency labels (L1 - L23) are given to the central frequencies, respectively.

Meanwhile, when the frequency label is supplied through an operation unit (not shown) by a user, the DAB receiver 50 make an station-selecting operation. An explanation will be given for the case where the user inputs the frequency label of "7B" in BANDIII through the operation unit of the DAB receiver.

When "7B" is inputted from the operation unit, a CPU 30 turns ON the power source for the first signal receiving section 21 in BANDIII and turn OFF the power source for the second signal receiving section 24. Next, the CPU 30 controls the PLL circuit 28 in order to receive the frequency of "7B". On the basis of a control signal from the CPU 30, the PLL circuit 28 supplies the control voltage CV to the antenna tuning circuit 21a, high-frequency circuit 21c and VCO 28a. Since the antenna tuning circuit 21a, high-frequency tuning circuit 21a and VCO 29a have previously been tracked in the relationship represented by Equation (1) on the basis of the control voltage, the antenna tuning circuit 21a and the high-frequency tuning circuit 21c are tuned with the central frequency (190.640 MHz) and the VCO 28a oscillates at the oscillating frequency (151. 728 MHz) necessary for conversion into the intermediate frequency (38.912 MHz).

The signal ASIII in BANDIII supplied through the first antenna 20 is selected at only the central frequency of "7B" by the antenna tuning circuit 21b, and supplied to the AGC amplifier 21b. The high frequency signal RFS signal amplified by the AGC amplifier 21b is further selected by the high frequency tuning circuit 21c and supplied to the mixer circuit 29. The mixer circuit 29 serves to extract the frequency of the sum of or difference between the supplied two frequencies, and for example, produces the frequency (38.912 MHz) of the difference between the frequency (190.640 MHz) of "7B" supplied from the high frequency tuning circuit 21c and the oscillating frequency (151.728 MHz) supplied from the VCO 28a.

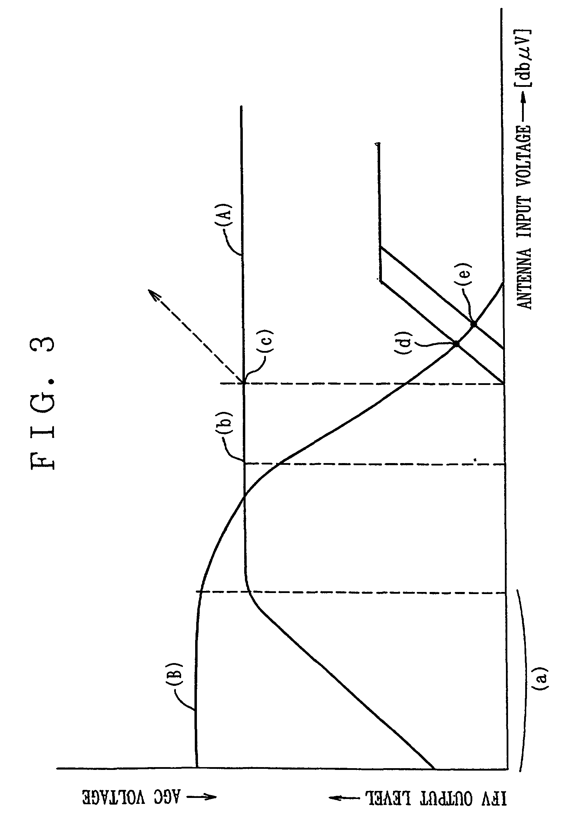

Fig. 3 shows the relationship between the value of the signal ASIII supplied through the antenna when the desired station is received by the DAB receiver 50, i.e. antenna input voltage versus output level IFV and AGC voltage. The abscissa represents the antenna input voltage and the ordinate represents the output level IFV and AGC voltage. Now, the characteristic relative to the relationship of the antenna input voltage vs. output level IFV is referred to as an input/output characteristic (A), and the characteristic relative to the relationship of the antenna input voltage vs. the AGC voltage is referred to as an AGC characteristic (B).

As seen from Fig. 3, regarding the input/output characteristic (A), in the region (a) where the antenna input is small, the output level IFV increases substantially linearly with an increase in the antenna input voltage.

On the other hand, the AGC voltage remains substantially equal for the antenna input voltage. However, when the antenna input voltage exceeds the region (a) of the input/output characteristic, the AGC voltage gradually lowers to reduce the gain of the AGC amplifier 21b gradually.

In short, in the region where the antenna input voltage is small, the output level IFV increases linearly with an increase in the antenna input voltage. However, when the antenna input voltage becomes large, correspondingly, the gain of the AGC amplifier 21b lowers substantially linearly so that the output level IFV which is substantially constant is produced for the region including point (b) of the input/output characteristic where the antenna output is relatively large. When the antenna input voltage further increases so that the input/output characteristic enters a region exceeding point (c) of the input/output characteristic, the gain of the AGC amplifier 21b does not lower even when the AGC voltage lowers. Then, the output level IFV starts to increase again as indicated by dotted line in Fig. 3.

The region exceeding point (c) of the input/output characteristic corresponds to the case where the signal supplied to the antenna is in a relatively strong electric field (for example, 40 dBμV - 7050 dBμV) and is a region where the high frequency signal RFS which could not be attenuated by the AGC amplifier 21b exceeds the dynamic range of the mixer circuit 29. In this region, signal disturbance is apt to occur. In order to overcome such inconvenience, the DAB receiver 50 according to the invention causes the level comparator 27b to be turned on using the AGC voltage (voltage at point (d)) which is produced when the antenna input voltage exceeds point (c) so that the switch voltage SV is supplied to the first and the second damping means 22 and 25.

Specifically, when the level comparator 27b is supplied with the voltage at a prescribed point (d) of the AGC voltage, it supplies a switch voltage SV to the first damping means. The switch voltage supplied through the resistor R1 and the diode D1 turns ON the PIN diode D2 constituting the first damping means 22 and turns ON the PIN diode D3 constituting the second damping means 25 through the high frequency coil L1 which is the coupling means 26. Thus, when the two PIN diodes D2 and D3 are supplied with the switch voltage SV from the level comparator 27b, they are forward-biased and reduced in their impedance so that the input impedance of the first and second receiving sections 21 and 24 are attenuated. As a result, the signal ASIII in BANDIII supplied through the first antenna is attenuated with a reduction in the impedance of the PIN diode D2 and supplied to the antenna tuning circuit 21a. Thus, the output level IFV can be maintained constant for the antenna input voltage in the region exceeding the point (c).

An explanation will be given for the case where the user inputs the frequency label of "L1" in L-BAND through the operation unit of the DAB receiver.

When "L1" is inputted from the operation unit, the CPU 30 turns OFF the power source for the first signal receiving section 21 in BANDIII and turn ON the power source for the second signal receiving section 24. Next, the CPU 30 controls the PLL circuit 28 so that the signal DCS in the converted L-BAND is changed into the oscillating frequency (152.480 - 190.144 MHz) of the VCO 28 necessary for conversion into the intermediate frequency IF (described below).

The signal ASL in the L-BAND supplied through the second antenna 23 is supplied to the down converter 24b through the BPF 24a. The signal ASL in L-BAND is converted into the DCS in the converted L-BAND on the basis of the following equation.

$$\text{L-BAND (1452.960 - 1490.62 MHz) - fixed oscillating}$$

$$\text{frequency (126. 568 MHz) = converted L-BAND (191. 392 -}$$

$$229.056$$

$$\text{MHz)} \qquad\qquad (2)$$

The signal DCS in the converted L-BAND (191. 392 - 229.056 MHz) is mixed with the oscillating frequency (152.480 - 190.144 Mz) of the VCO 28a by the mixer circuit 29, and converted into the intermediate frequency. In this case, since the "L1" has been supplied from the operating unit, on the basis of the control by the CPU 30, the PLL circuit 28 oscillates the VCO 28a to produce the oscillating frequency (152.480 MHz) necessary to convert the frequency (191.392 MHz) corresponding to "L1" into the intermediate frequency. Therefore, the DAB receiver 50 can selectively receive only the station having the label of "L1" on the frequency band in L-BAND.

As described above, when the signal in L-BAND is received, the AGC circuit 24d incorporated in the down converter 24b operates so that the input/output characteristic and AGC characteristic can be obtained, as shown in Fig. 3, as in the case when the signal in BANDIII is received.

While the signal in L-BAND is received, the power for the first receiving section 21 in the BANDIII is OFF, but the voltage supplying means 27 is operating. Therefore, at the antenna input voltage exceeding the point (c), the level comparator 27b is operated by the AGC voltage from the AGC circuit 27a as in the case when the signal in BANDIII is received, thereby operating the first and the second damping means 22 and 25.

However, the DAB receiver 50 allots different receiving sections for the signals in BANDIII and L-BAND so that they may not exhibit the same input/output characteristic. In this case, the operating regions where the mixer circuit 29 is likely to generate disturbance of interference are different for BANDIII and L-BAND.

In order to deal with such a problem, the DAB receiver 50 changes the threshold value of the level comparator 27b for driving the first and the second damping means 22 and 25 by means of the threshold voltage changing circuit 27c. For example, the threshold values are selected so that when the signal in L-BAND is received, the first and the second damping means 22 and 25 are driven at the point (e), and when the signal in BANDIII is received, they are driven at point (d).

In such a configuration, substantially the same signal receiving quality can be obtained for both when the signals in BANDIII and L-BAND are received.

Where the DAB receiver 50 is mounted in a vehicle, as shown in Fig. 5, in the area where the receiving areas of the BANDIII station and the L-BAND station overlap, both the frequency (190.640 MHz) of "7B" and the frequency of (192.352 MHz) of "7C" in the frequency band of BANDIII supplied through the first antenna 20 have possibility of giving disturbance of interference to the frequency (191.392 MHz) of the converted L-BAND of "L1".

The DAB broadcasting uses the signal covering the band of ± 750 kHz for the central frequency. In this case, for example, the difference between the frequency (190.640 MHz) of "7B" in BANDIII and the frequency (191.392) of "L1" in the converted L-BAND is 752 kHz. Therefore, the frequency bands are mixed to generate disturbance of interference to each other.

Likewise, the difference between the frequency (220.352 MHz) of "11C" in BANDIII and the frequency (220.496 MHz) of "L18" in the converted L-BAND is 144 kHz. Such a frequency difference leads to complete disturbance of interference to each other. In this way, as understood from the relationship between the frequency in BANDIII shown in Fig. 2A and that in the converted L-BAND shown in Fig. 2B, there are many stations where the frequencies in BANDIII interfere the frequencies in the converted L-BAND.

However, when the antenna input voltage exceeding the point (c) generating interference disturbance is supplied, in the DAB receiver 50 according to the invention, the second damping means 25 is driven and the PIN diode D2 of the first damping means 22 is turned ON through the coupling means. Therefore, the first antenna 20 is damped with the low impedance in the PIN diode D2. In addition, the signal in BANDIII supplied through the first antenna 20 is shortcircuited at the ground potential by the first damping means 22 provided immediately before the first receiving section 21. Therefore, the signal in BANDIII does not invade the mixer circuit and hence does not generate interference disturbance.

In the DAB receiver 50 according to the embodiments of the invention, although two antennas of the first antenna 20 and the second antenna 23 are provided, a single common antenna for both BANDIII and L-BAND may be provided to obtain the same effect. Although the first and the second damping means 22, 25 were constituted by the PIN diodes D2 and D3, they may be constituted by high frequency switch elements.

## Claims

1. A DAB receiver comprising:

   a first receiving section (21) for receiving a first signal in a first frequency band supplied through a first antenna (20);

   a second receiving section (24) for receiving a second signal in a second frequency band higher than the first frequency band, supplied through a second antenna (23), said second receiving section (24) having means (24b) for converting the second frequency band into said first frequency band;

   **characterized by** further comprising
   first damping means (22) for damping the first signal received by said first receiving section (21);
   second damping means (25) for damping the second signal received by said second receiving section (24); and
   voltage supplying means (27) for driving said first and second damping means (22,25) according to the value of the first signal or second signal through said first antenna (20) or second antenna (23); and wherein
   said first damping means (22) and said second damping means (25) are directly coupled with each other by coupling means (26); and
   said first damping means (22) and said second damping means (25) are located immediately before said first receiving section (21) and said second receiving section (24), respectively.

2. A DAB receiver according to claim 1, wherein the first signal in the first frequency band is a signal in BANDIII, and the second signal in the second frequency band is a signal in L-BAND.

3. A DAB receiver according to claim 1 or 2, wherein said first and said second damping means (22,25) are PIN diodes (D2,D3) which become lower in impedance with an increase in a current value.

4. A DAB receiver according to any one of claims 1 to 3, wherein said voltage supplying means (27) is switched in accordance with values of said first signal and second signal.

5. A DAB receiver according to claim 1, wherein said coupling means (26) is a high frequency coil (L1).

**Patentansprüche**

1. DAB-Empfänger, umfassend:

   einen ersten Empfangsabschnitt (21) zum Empfangen eines ersten Signals in einem ersten Frequenzband, zugeführt durch eine erste Antenne (20);

   einen zweiten Empfangsabschnitt (24) zum Empfangen eines zweiten Signals in einem zweiten Frequenzband, höher als das erste Frequenzband, zugeführt durch eine zweite Antenne (23), wobei der zweite Empfangsabschnitt (24) über Mittel (24b) zum Konvertieren des zweiten Frequenzbandes in das erste Frequenzband verfügt;

   **gekennzeichnet durch**
   ein erstes Dämpfungsmittel (22) zum Dämpfen des ersten Signals, empfangen **durch** den ersten Empfangsabschnitt (21);
   ein zweites Dämpfungsmittel (25) zum Dämpfen des zweiten Signals, empfangen **durch** den zweiten Empfangsabschnitt (24); und
   eine Spannungsversorgung (27) zum Ansteuern des ersten und des zweiten Dämpfungsmittels (22, 25) gemäß dem Wert des ersten Signals oder des zweiten Signals über die erste Antenne (20) oder die zweite Antenne (23); und wobei
   das erste Dämpfungsmittel (22) und das zweite Dämpfungsmittel (25) über ein Kopplungsmittel (26) direkt miteinander gekoppelt sind; und
   sich das erste Dämpfungsmittel (22) und das zweite Dämpfungsmittel (25) jeweils unmittelbar vor dem ersten Empfangsabschnitt (21) und dem zweiten Empfangsabschnitt (24) befinden.

2. DAB-Empfänger nach Anspruch 1, wobei das erste Signal im ersten Frequenzband ein Signal in BANDIII ist, und das zweite Signal im zweiten Frequenzband ein Signal im L-BAND ist

3. DAB-Empfänger nach Anspruch 1 oder 2, wobei das erste und das zweite Dämpfungsmittel (22, 25) PIN-Dioden (D2, D3) sind, deren Impedanz mit dem Ansteigen eines Stromwertes sinkt.

4. DAB-Empfänger nach einem der Ansprüche 1 bis 3, wobei die Spannungsversorgung (27) in Übereinstimmung mit Werten des ersten Signals und zweiten Signals geschaltet wird.

5. DAB-Empfänger nach Anspruch 1, wobei das Kopplungsmittel (26) eine Hochfrequenzspule (L1) ist.

**Revendications**

1. Récepteur DAB (Digital Audio Broadcast diffusion audio numérique) comprenant :

   une première section de réception (21) pour recevoir un premier signal dans une première bande de fréquences à travers une première antenne (20) ;
   une seconde section de réception (24) pour recevoir un second signal dans une seconde bande de fréquences supérieure à la première bande de fréquences, à travers une seconde antenne (23), ladite seconde section de réception (24) ayant des moyens (24b) pour convertir la seconde bande de fréquences en ladite première bande de fréquences ;

   **caractérisé en ce qu'**il comprend de plus :

des premiers moyens d'amortissement (22) pour amortir le premier signal reçu par ladite première section de réception (21) ;

des seconds moyens d'amortissement (25) pour amortir le second signal reçu par ladite seconde section de réception (24) ; et

des moyens de fourniture de tension (27) pour piloter lesdits premiers et seconds moyens d'amortissement (22, 25) selon la valeur du premier signal ou du second signal à travers ladite première antenne (20) ou de ladite seconde antenne (23) ; et dans lequel

lesdits premiers moyens d'amortissement (22) et lesdits seconds moyens d'amortissement (25) sont directement couplés l'un à l'autre par des moyens de couplage (26) ; et

lesdits premiers moyens d'amortissement (22) et lesdits seconds moyens d'amortissement (25) sont respectivement situés immédiatement avant ladite première section de réception (21) et ladite seconde section de réception (24).

2.   Récepteur DAB selon la revendication 1, dans lequel le premier signal dans la première bande de fréquences est un signal dans la bande III, et le second signal dans la seconde bande de fréquences est un signal dans la bande L.

3.   Récepteur DAB selon la revendication 1 ou 2, dans lequel lesdits premiers et lesdits seconds moyens d'amortissement (22, 25) sont des diodes PIN (D2, D3) dont l'impédance diminue lorsque la valeur de courant augmente.

4.   Récepteur DAB selon l'une quelconque des revendications 1 à 3, dans lequel lesdits moyens de fourniture de tension (27) sont commutés selon les valeurs dudit premier signal et dudit second signal.

5.   Récepteur DAB selon la revendication 1, dans lequel lesdits moyens de couplage (26) sont constitués par une bobine de fréquence élevée (L1).

# FIG. 1

FIG. 1

EP 1 065 814 B1

# F I G . 2 A

| BAND III | |
|---|---|
| FREQUENCY LABEL | CENTER FREQUENCY (MHz) |
| 5A | 174.928 |
| 5B | 176.640 |
| 5C | 178.352 |
| 5D | 180.064 |
| 6A | 181.936 |
| 6B | 183.648 |
| 6C | 185.360 |
| 6D | 187.072 |
| 7A | 188.928 |
| 7B | 190.640 |
| 7C | 192.352 |
| 7D | 194.064 |
| 8A | 195.936 |
| 8B | 197.648 |
| 8C | 199.360 |
| 8D | 201.072 |
| 9A | 202.928 |
| 9B | 204.640 |
| 9C | 206.352 |
| 9D | 208.064 |
| 10A | 209.936 |
| 10B | 211.648 |
| 10C | 213.630 |
| 10D | 215.072 |
| 11A | 216.928 |
| 11B | 218.640 |
| 11C | 220.352 |
| 11D | 220.064 |
| 12A | 223.936 |
| 12B | 225.648 |
| 12C | 227.360 |
| 12D | 229.072 |
| 13A | 230.784 |
| 13B | 232.496 |
| 13C | 234.208 |
| 13D | 235.776 |
| 13E | 237.488 |
| 13F | 239.200 |

# F I G . 2 B

| L-Band | |
|---|---|
| FREQUENCY LABEL | CENTER FREQUENCY (MHz) |
| L1 | 1452.960 |
| L2 | 1454.672 |
| L3 | 1456.384 |
| L4 | 1458.096 |
| L5 | 1459.808 |
| L6 | 1461.520 |
| L7 | 1463.232 |
| L8 | 1464.944 |
| L9 | 1466.656 |
| L10 | 1468.368 |
| L11 | 1470.080 |
| L12 | 1471.792 |
| L13 | 1473.504 |
| L14 | 1475.216 |
| L15 | 1476.928 |
| L16 | 1478.640 |
| L17 | 1480.352 |
| L18 | 1482.064 |
| L19 | 1483.776 |
| L20 | 1485.488 |
| L21 | 1487.200 |
| L22 | 1488.912 |
| L23 | 1490.624 |

| CONVERTED L-Band | |
|---|---|
| FREQUENCY LABEL | CENTER FREQUENCY (MHz) |
| L1 | 191.392 |
| L2 | 193.104 |
| L3 | 194.816 |
| L4 | 196.528 |
| L5 | 198.240 |
| L6 | 199.952 |
| L7 | 201.664 |
| L8 | 203.376 |
| L9 | 205.088 |
| L10 | 206.800 |
| L11 | 208.512 |
| L12 | 210.224 |
| L13 | 211.936 |
| L14 | 213.648 |
| L15 | 215.360 |
| L16 | 217.072 |
| L17 | 218.784 |
| L18 | 220.496 |
| L19 | 222.208 |
| L20 | 223.920 |
| L21 | 225.632 |
| L22 | 227.344 |
| L23 | 229.056 |

F I G. 3

(A)

(B)

(a) (b) (c)

(d) (e)

AGC VOLTAGE →

← IFV OUTPUT LEVEL

ANTENNA INPUT VOLTAGE →[db$\mu$V]

# FIG. 4

# FIG. 5

BAND III
STATION

L-BAND
STATION

L-BAND
RECEIVING
AREA

10

BAND III
RECEIVING
AREA

EP 1 065 814 B1

14